# DEMANDE DE BREVET EUROPEEN

(11) **EP 2 813 834 A1**
(43) Date de publication de la demande: **17.12.2014**
(21) Numéro de dépôt: 14305692.7
(22) Date de dépôt: 12.05.2014
(51) Int. Cl.: G01N 1/08, B01J 8/00, G01N 1/20

(54) **Dispositif d'échantillonnage de solide à partir d'une enceinte fermée et procédé pour utiliser un tel dispositif**

(30) Priorité: 12.06.2013 FR 1355441
(71) Demandeur: AXENS, 92508 Rueil Malmaison Cedex (FR)
(72) Inventeur: Munier, Michel, 77820 Le Châtelet en Brie (FR); Gouzard, Jean-Paul, 92500 Rueil Malmaison (FR); Girod, Rémi, 75015 Paris (FR)
(74) Mandataire: Ruis, Alain

(57) **Abrégé**

Dispositif d'échantillonnage de solide (14) à partir d'une enceinte fermée (12), ledit dispositif comprenant un corps (18) portant une tête de prélèvement (16) avec une échancrure de collecte (28) du solide, une échancrure de transfert (28') du solide collecté, des moyens d'obturation à déplacement angulaire (30) pour lesdites échancrures contrôlés par des moyens de commande (48).

Le dispositif comprend en outre des moyens de limitation de débattement angulaire (78, 80) des moyens d'obturation pour un déplacement à vide (c) desdits moyens.

## Description

La présente invention se rapporte à un dispositif d'échantillonnage de solide à partir d'une enceinte fermée, telle que par exemple un silo, une trémie, un réacteur, un régénérateur ou un adsorbeur, et à un procédé pour utiliser un tel dispositif.

Elle concerne plus particulièrement un dispositif d'échantillonnage permettant de prélever par gravité un échantillon de solide sous forme de granulés, d'extrudés, de billes, comme celui utilisé pour un catalyseur ou un adsorbant par exemple.

Lorsque des solides divisés sont chargés dans des enceintes fonctionnant sous pression et/ou à des températures élevées ou lorsqu'ils sont disposés dans des enceintes en y étant stockés ou convoyé par gravitation, il arrive fréquemment qu'il soit nécessaire de prélever un échantillon de solide.

Ce prélèvement a pour but essentiel de vérifier les propriétés mécaniques ou physico-chimiques du solide et ainsi de détecter d'éventuelles impuretés déposées sur sa surface ou de suivre l'évolution de la qualité du solide stocké ou en mouvement.

Cela permet notamment de comprendre les raisons d'un éventuel disfonctionnement, de vérifier la tenue au stockage dans le temps du solide, ou de prévoir la durée maximale de fonctionnement du solide et ainsi de régler ou d'anticiper des problèmes éventuels.

Dans le cas d'unités de raffinage utilisant des solides divisés cela peut également faciliter le suivi de l'unité comprenant le contenu de l'enceinte, par exemple un réacteur catalytique, et permettre ainsi d'optimiser son fonctionnement.

Il est connu, notamment par le document US 4 009 618, un dispositif d'échantillonnage qui permet de prélever des échantillons de matériaux solides à l'intérieur d'une enceinte fermée, telle que par exemple un réacteur permettant le craquage catalytique d'hydrocarbures en présence d'un catalyseur.

Comme mieux décrit dans ce document, ces prélèvements sont effectués au moyen d'une tête de prélèvement introduite à l'intérieure de l'enceinte et portée par le corps du dispositif. Cette tête comprend un réceptacle muni d'une échancrure en partie supérieure et inférieure et deux disques rotatifs ajourés entrainés en rotation par un arbre commandé par tous moyens connus. Lors d'une première rotation de ces disques, un échantillon de solide est admis dans le réceptacle au travers de l'échancrure supérieure contrôlé par un des disques alors que l'autre des disques obture l'échancrure en partie inférieure. Après une autre rotation de ces disques, l'échancrure supérieure est obturée par un des disques alors que l'autre des disques libère l'échancrure en partie inférieure de manière à ce que l'échantillon de solide soit dirigé vers des moyens de réception.

De tels dispositifs présentent toutefois l'inconvénient de pouvoir se gripper lors des opérations d'échantillonnage du solide.

En effet, ce grippage peut provenir du solide qui peut être partiellement broyé et/ou coincé dans certaines parties en mouvement, de rayures présentes sur les pièces constitutives du dispositif d'échantillonnage, ou de dilatations intervenant sur des pièces mobiles présentant des tolérances étroites.

Suivant l'utilisation, plus ou moins fréquente, et suivant les conditions opératoires, le dispositif peut présenter des difficultés d'opérabilité en raison du grippage des différentes parties mobiles, voire une mise hors service lors du blocage les pièces mobiles.

Pour remédier à cet inconvénient, il a été proposé, comme décrit par exemple dans le brevet US 3 653 265 ou le brevet US 3 786 682, des dispositifs pneumatiques ou des dispositifs qui font intervenir des débits gazeux comme moyen de transport du solide.

Ces dispositifs permettent d'éviter les problèmes mécaniques, mais a pour autre inconvénient de transporter de faibles quantités de solide lors de l'échantillonnage.

La présente invention vise à remédier aux inconvénients ci-dessus grâce à un dispositif d'échantillonnage de solide simple qui permet d'éviter le grippage des parties mobiles de la tête de prélèvement tout en n'augmentant pas la fréquence d'utilisation du dispositif et sans influer sur la quantité de solide prélevée. Ce grippage peut être engendré par certains types de solides ou lorsque les manoeuvres d'échantillonnage sont effectuées avec une fréquence faible.

A cet effet, l'invention concerne un dispositif d'échantillonnage de solide à partir d'une enceinte fermée, ledit dispositif comprenant un corps portant une tête de prélèvement avec une échancrure de collecte du solide, une échancrure de transfert du solide collecté, des moyens d'obturation à déplacement angulaire pour lesdites échancrures contrôlés par des moyens de commande, caractérisé en ce que le dispositif comprend en outre des moyens de limitation de débattement angulaire des moyens d'obturation pour un déplacement à vide desdits moyens.

Les moyens de commande peuvent comprendre une tige reliée aux moyens d'obturation et les moyens de limitation peuvent comprendre des butées, dont l'une au moins des butées est amovible, pour limiter le déplacement angulaire.

La tige peut être reliée à un levier de manoeuvre coopérant avec les butées.

La tige peut porter un moyen à ressort de torsion pour l'appui circonférentiel du levier sur l'une des butées.

Les moyens de commande peuvent comprendre une tige reliée aux moyens d'obturation et à un motoréducteur à deux sens de rotation avec un dispositif de détection des fins de course pour limiter le déplacement angulaire à vide (c) des moyens d'obturation.

Les moyens de commande peuvent comprendre une tige reliée aux moyens d'obturation et à une came contrôlée par un vérin.

Les moyens de commande peuvent comprendre une tige reliée aux moyens d'obturation et portant un pignon coopérant avec une crémaillère portée par un vérin et la limitation du déplacement angulaire à vide (c) des moyens d'obturation peut être réalisée par la course du piston du vérin.

Les moyens d'obturation peuvent comprendre un godet muni d'un évidement axial traversant ledit godet.

L'invention concerne également un dispositif qui peut être appliqué au prélèvement des échantillons de catalyseurs dans une enceinte isolée de l'atmosphère.

L'invention concerne aussi un dispositif qui peut être appliqué au prélèvement des échantillons de catalyseurs dans une unité de raffinage de pétrole.

L'invention concerne encore un dispositif qui peut être appliqué au prélèvement des échantillons de catalyseurs dans une unité de reformage.

L'invention se rapporte également à un procédé pour utiliser un dispositif d'échantillonnage de solide à partir d'une enceinte fermée, ledit dispositif comprenant une tête de prélèvement avec une échancrure de collecte du solide, une échancrure de transfert du solide collecté et des moyens d'obturation à déplacement angulaire pour lesdites échancrures contrôlés par des moyens de commande caractérisé en ce qu'il consiste à réaliser un déplacement angulaire à vide (c) des moyens d'obturation pour éviter le grippage desdits moyens d'obturation et/ou desdits moyens de commande.

Le procédé peut consister à réaliser le déplacement angulaire à vide selon des moyens d'obturation en ne permettant pas la collecte du solide par la tête de prélèvement.

Le procédé peut consister à réaliser le déplacement angulaire à vide de façon périodique.

Le procédé peut consister à réaliser le déplacement angulaire à vide selon une périodicité hebdomadaire.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue en coupe partielle du dispositif d'échantillonnage selon l'invention ;
- la figure 2 qui est une vue en bout selon la flèche A du dispositif d'échantillonnage de la figure 1 ;
- la figure 3 qui est une vue en perspective de l'un des éléments du dispositif d'échantillonnage ;
- la figure 4 qui est une vue en bout selon la flèche B du dispositif d'échantillonnage de la figure 1 ;
- la figure 5 est une vue en coupe partielle à plus grande échelle de l'extrémité inférieure du dispositif de la figure 1 et
- la figure 6 est une vue en coupe radiale selon la ligne 6-6 de la figure 5.

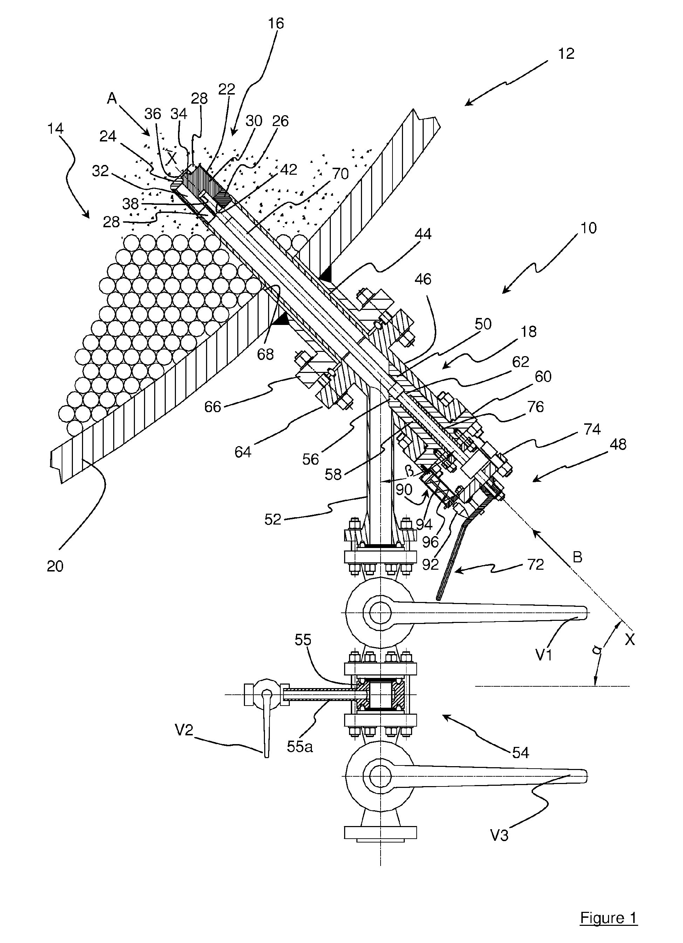

Sur l'exemple représenté à la figure 1, un dispositif d'échantillonnage 10 est placé sur une enceinte 12, de préférence fermée et avantageusement isolée de l'atmosphère, contenant des solides divisés 14.

De manière avantageuse, ce dispositif d'échantillonnage peut être utilisé lorsque l'enceinte est en état de fonctionnement ou à l'arrêt.

L'enceinte qui va être exposée dans la suite de la description à titre uniquement d'exemple est un réacteur de catalyse en lit fixe mais toute autre enceinte, comme un silo, une trémie, un régénérateur ou un adsorbeur n'est pas écartée.

Les solides contenus dans cette enceinte sont des particules solides sous la forme de granulés, d'extrudés ou de billes.

Le dispositif d'échantillonnage comprend une tête 16 pour le prélèvement d'échantillon de solide à l'intérieur de cette enceinte et qui est portée par un corps tubulaire 18 d'axe longitudinal XX traversant la paroi 20 du réacteur 12.

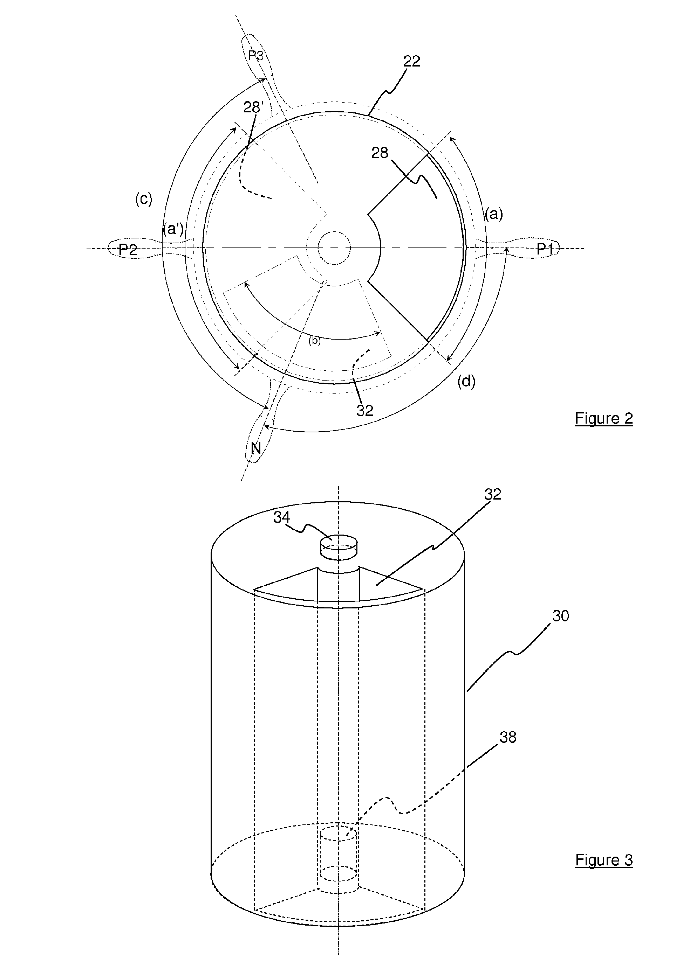

En se rapportant en plus aux figures 2 et 3, la tête fonctionne avec un principe de chicane qui permet de prendre une quantité déterminée de particules solides et d'éviter l'écoulement d'une quantité plus grande.

Cette tête comprend une enveloppe cylindrique 22, ici circulaire, d'axe longitudinal confondu avec celui du corps en étant fermée en partie haute par un couvercle 24 et en partie basse par un fond 26. Le couvercle ainsi que le fond porte chacun une échancrure 28, 28' en forme de secteur angulaire (a) et (a').

L'intérieur de l'enveloppe loge un godet d'obturation 30 des échancrures en forme de pièce cylindrique pleine d'axe longitudinal confondu avec celui de l'enveloppe. Ce godet a un diamètre qui correspond sensiblement à celui de l'intérieur de l'enveloppe et une hauteur sensiblement égale celle de cette enveloppe de manière à permettre la libre rotation de ce godet à l'intérieur de l'enveloppe et entre le couvercle et le fond.

Ce godet porte un évidement 32 sensiblement parallèle à l'axe longitudinal et traversant de part en part le godet. De manière avantageuse, l'évidement 32 a une section transversale en forme de secteur angulaire (b) dont la forme correspond au secteur angulaire du couvercle et du fond.

De manière préférentielle le secteur angulaire (a) du couvercle a des dimensions et un angle de secteur plus petit que l'évidement du godet alors que le secteur angulaire (a') du fond couvercle a des dimensions et un angle de secteur plus grand que ceux de la section angulaire de l'évidement du godet. Le volume de cet évidement permet ainsi de déterminer le volume du prélèvement du solide.

Ce godet porte sur sa face plane supérieure un pion de positionnement 34 coaxial à l'axe du godet et qui coopère avec un alésage borgne 36 prévu sur la face interne du couvercle. Sur sa face plane inferieure, le godet porte un alésage 38 pour la réception d'un organe de commande en rotation qui sera plus détaillé dans la suite de la description. Pour permettre la liaison de cet organe de commande avec le godet, le fond 28 est pourvu d'un perçage 42 en correspondance avec l'alésage 38.

En revenant à la figure 1, le corps 18, qui est avantageusement placé sous l'enceinte 12, est incliné d'un angle α qui est compris entre 30 et 90° par rapport à l'horizontale.

Ce corps comporte une extension tubulaire supérieure 44, ici de forme circulaire, qui pénètre en partie à l'intérieur de l'enceinte et qui supporte la tête de prélèvement d'échantillon pour le solide contenu dans cette enceinte. Ce corps comprend également extension tubulaire inférieure 46 qui contient les différents moyens 48 pour la commande en rotation du godet 30.

L'extension tubulaire inférieure contient également un organe déflecteur 50 logé et fixé à l'intérieur de cette extension pour diriger l'échantillon prélevé vers une conduite tubulaire 52 aboutissant à un sas 54.

Le sas est composé de trois vannes V1, V2, V3 et d'une partie tubulaire 55 portant une tubulure 55a sensiblement orthogonale à la partie tubulaire 55 et reliée à la vanne V2.

Suivant l'ordre d'ouverture et de fermeture de ces vannes il est possible d'isoler l'échantillon située dans la partie tubulaire 55 puis de le purger via la tubulure 55a et enfin de le récupérer dans tous moyens de réception.

L'organe déflecteur présente une surface déflectrice 56 portée par un manchon tubulaire 58 avec un angle par rapport à la verticale permettant l'écoulement gravitaire du solide prélevé vers le sas. Cet angle est de préférence compris entre 0° et 60°, de manière plus préférée compris entre 5° et 45° et de manière plus préférée entre 10° et 30°. Cet organe comprend également une embase de fixation 60 sur l'extrémité inférieure du corps ainsi qu'un perçage axial longitudinal 62 partant de la surface déflectrice et arrivant à l'embase 60.

La conduite 52 est orientée d'un angle β généralement compris entre 10° et 90°, préférentiellement compris entre 20 °et 70° et plus préférentiellement compris entre 30 ° et 60 °, voire entre 40 et 50 ° par rapport à l'axe XX du corps.

Comme mieux visible sur cette figure 1, le corps est pourvu d'une bride de fixation 64 pour l'assemblage sur une semelle 66 fixée sur l'extérieur de la paroi 20 et entourant un trou de passage 68 pour l'extension tubulaire supérieure.

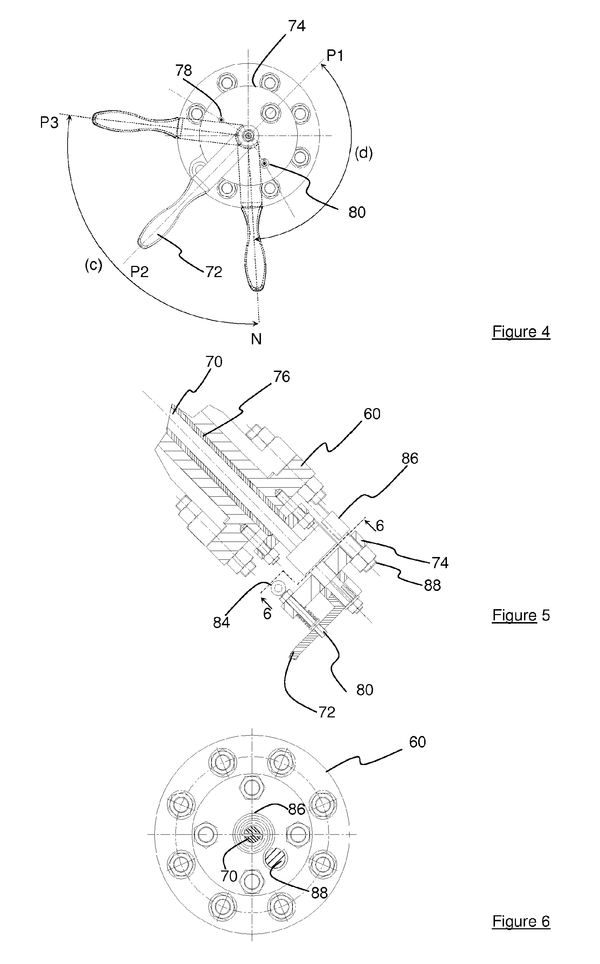

En associant la figure 1 aux figures 4, 5 et 6, les moyens de commande en rotation 48 du godet 30 comprennent une tige d'entraînement 70 qui traverse la totalité du corps 18 ainsi que l'organe déflecteur 50 en s'étendant de ce godet jusqu'à l'extérieur de l'extrémité basse du corps pour être reliée à un levier de manoeuvre 72 placé à l'extérieur du corps.

L'extrémité supérieure de cette tige est reliée au godet 30 au travers de l'alésage 38 par tous moyens connus, comme par vissage ou par un emboitement mâle-femelle, alors que l'extrémité inférieure de cette tige est reliée fixement au levier préférentiellement par clavetage et vissage.

Avantageusement, une platine circulaire 74 est logée entre le levier de manoeuvre et l'extrémité basse du corps en étant fixé sur l'embase de l'organe déflecteur. Cette fixation peut par exemple être assurée par un système associant goujons et écrous. Cette fixation permet ainsi d'éviter la mise en rotation de la platine lors de l'actionnement de la poignée 72 et sert de butée axiale à la tige par l'intermédiaire du levier.

De plus, un dispositif d'étanchéité 76, plus communément appelé presse étoupe, est logé entre la tige 70 et le perçage 62. Ce dispositif permet ainsi d'absorber les différences de température et de pression entre l'enceinte et l'extérieur.

La platine porte des moyens de limitation en débattement angulaire du levier et par conséquent du godet auquel il est relié par la tige. Ces moyens de limitation comprennent des butées angulaires 78, 80 disposées selon un écartement angulaire qui permet de limiter le débattement en rotation du levier selon une plage angulaire (c) entre ces deux butées.

Les butées 78 et 80 sont toutes ou partiellement amovibles afin de permettre la rotation complète du levier.

De préférence, il est souhaitable de n'avoir qu'une seule butée escamotable 80 comme représenté sur les figures 4 et 5. A titre d'exemple, cette butée est formée par une tige 82 portée à coulissement par la platine 74 et soumise à l'action d'un ressort à spires d'extension de façon à ce que l'extrémité de cette tige fasse saillie au delà de la platine pour arrêter la rotation du levier.

Pour retirer cette butée et laisser ainsi le passage au levier, une action antagoniste à celle de la force du ressort, comme une traction sur l'extrémité 84 permet d'escamoter l'extrémité libre de cette tige dans la platine.

Comme représenté sur la figure 6, un ressort de torsion 86, de type ressort spiralé, permet de rappeler la tige 70 et le godet 30 dans une position déterminée. Ce ressort est solidaire de la tige et d'un goujon 88 fixé sur le corps ou l'organe déflecteur.

Cette position déterminée est avantageusement celle identifiée par la position neutre (N) du levier et du godet.

Bien entendu et cela sans sortir du cadre de l'invention, la rotation de la tige 68 et de son godet 30 peut être motorisée.

Pour cela, la tige peut être reliée à un motoréducteur électrique ou pneumatique, agissant dans les deux sens de rotation avec un dispositif de détection des fins de course pour rester dans la plage angulaire (c) de débattement du godet. Dans ce cas, la présence des butées 78 et 80 n'est plus indispensable.

Il peut être aussi envisagé de disposer d'un vérin muni d'une crémaillère entrainant un pignon monté sur la tige. Comme la course du piston est limitée par construction, le rappel est soit fait par un vérin double effet soit par un vérin simple effet avec un ressort intégré.

De même et comme illustrée sur la figure 1, il peut être utilisé un vérin simple effet pneumatique 90 muni d'une came 92 en forme d'ogive qui est solidaire du piston 94 dont la course est limitée par construction. Le rappel du vérin est réalisé par un ressort 96 intégré à celui-ci.

En position N du levier, la came 92 est en contact radial avec la poignée 72. Lorsque la commande de sortie du vérin 90 est donnée, la pression dans la chambre appropriée de ce vérin engendre un mouvement de translation de sortie du piston 94. A la suite de ce mouvement translatif, la came solidaire de ce piston 94 provoque, au fur et à mesure de sa sortie, la rotation de la poignée 72.

La différence de diamètre du profil de la came 92, lorsqu'elle se situe au point N en contact avec la poignée 72, et le diamètre lorsque le piston 94 est entièrement sorti permet la rotation de la poignée d'une course (c) qui ne provoque pas de prise d'échantillon par le dispositif 14.

Une fois la commande de sortie du piston arrêtée, le piston revient à sa position d'origine par l'action du ressort 96.

Il est à noter que le dispositif de prise d'échantillon peut être opéré manuellement à tout moment et à n'importe quel stade de fonctionnement du vérin 90.

Pour réaliser le dispositif d'échantillonnage, le godet 30 est logé dans l'enveloppe 22. Le fond 26 est ensuite rapporté sur ce sous-ensemble en faisant correspondre l'alésage 38 avec le perçage 42 du fond. Le couvercle est ensuite rapporté avec la concordance du pion 34 avec l'alésage borgne 36.

Comme mieux visible sur la figure 2, l'échancrure 28 du couvercle 24 et l'échancrure 28' du fond 26 sont décalées l'une par rapport à l'autre, ici décalées diamétralement, de manière à ce qu'il ne puisse pas y avoir de communication par l'intermédiaire de l'évidement 32 formé dans le godet 30.

Bien entendu, le couvercle et le fond sont fixés sur l'enveloppe 22 par tous moyens connus, comme par vissage ou soudage.

Une fois ce sous-ensemble réalisé, celui-ci est monté et fixé sur l'extrémité supérieure de l'extension tubulaire 44.

Ensuite, l'ensemble formé par la tige 68, la platine avec les butées 78 et 80, le ressort de torsion 86 et le levier 72 qui commande le godet au travers de la tige, est introduit dans l'extension tubulaire inférieure 46.

Lors de cette introduction l'extrémité de la tige 68 est amenée à coopérer en rotation avec l'alésage 38 du godet 30 en étant solidaire de ce godet. Une fois ceci réalisé, la platine 74 est fixé sur l'organe déflecteur 50 comme précédemment décrit en prenant soin de mettre sous tension le ressort spiralé par l'intermédiaire de l'appui de l'extrémité de ce ressort sur le goujon 88.

Sous l'effet du ressort, le levier de manoeuvre 72 vient en appui sur la butée escamotable 80 de sorte que l'évidement 32 du godet se trouve dans une position dite neutre N (voir figures 2 et 4), c'est-à-dire sans aucune communication entre les échancrures 28 et 28' et en obturant l'échancrure 28 par sa face plane supérieure.

Une fois cet assemblage réalisé, le corps 18 portant la tête de prélèvement 16 est introduit dans l'enceinte 12 au travers du trou de passage 68 et est fixé sur la semelle 66 par tous moyens connus, comme par boulonnage. Le sas 54 est ensuite rapporté et fixé sur la conduite tubulaire 52 du corps.

Comme mieux illustré en particulier sur la figure 2, l'évidement 32 du godet peut avoir, outre la position neutre comme décrit ci-dessus, plusieurs autres positions.

Plus précisément, l'évidement 32 peut avoir une position de collecte (position P1) selon laquelle cet évidement 32 coïncide avec l'échancrure 28. Dans cette position, un échantillon de solide de volume égal à celui du volume interne évidé dans le godet est transféré par gravité de l'enceinte vers l'évidement 32 du godet, alors obturé en partie basse par la face pleine du fond 26.

La position de décharge (P2), qui est ici diamétralement opposée à celle de la position de collecte, correspond à celle où l'évidement coïncide avec l'échancrure 28' du fond 26 avec le transfert par gravité de l'échantillon de solide de l'évidement vers le corps du dispositif d'échantillonnage, l'échancrure 28 étant alors obturé par la face pleine supérieure du godet.

Enfin, une position de repos (position P3) dans laquelle le levier de manoeuvre 72 vient en appui sur la butée fixe 78 avec une position de l'évidement 32 du godet qui ne permette pas une communication entre les échancrures 28 et 28'.

Ainsi, lors de la rotation du levier et par conséquent du godet entre la position N et la position P3, il existe une page angulaire (c), dite course à vide, durant laquelle il n'y a pas de prélèvement d'échantillon de solide.

En fonctionnement, à partir de la position N du levier, l'opérateur agit sur la butée amovible 80 sur laquelle s'appuie le levier pour qu'elle s'escamote dans la platine pour ne pas gêner le déplacement angulaire de ce levier. Cet opérateur actionne le levier et par conséquent le godet dans le sens antihoraire selon un déplacement angulaire (d) entre la position N et la position P1. Arrivé à cette position, l'évidement 32 est en regard de l'échancrure 28 du couvercle et un échantillon de solide présent dans l'enceinte est collecté dans cet évidement.

Dés que l'évidement contient une quantité suffisante de solide et tout en maintenant la position escamotée de la butée, l'operateur déplace le levier (et le godet), selon un débattement angulaire de 180° dans un sens horaire, pour qu'il arrive à la position P2 avec la coïncidence de l'évidement 32 avec l'échancrure 28' du fond. Le solide contenu dans l'évidement est alors déchargé au travers de cette échancrure vers le corps 18 puis est amené vers l'entrée du sas 54 par la conduite tubulaire 52, les vannes V1 à V3 étant en position de fermeture.

Avantageusement, la butée amovible est remise en position initiale pour éviter que le godet ne revienne dans la position de collecte P1.

A la suite de cela, la vanne V1 est placée en position d'ouverture et l'échantillon de solide s'écoule dans la partie tubulaire 55 en amont de la vanne V3. La partie tubulaire dans laquelle se trouve l'échantillon est purgée et mise à l'atmosphère par l'ouverture puis la fermeture de la vanne V2. Enfin, la vanne V3 est ouverte pour récupérer l'échantillon à l'extérieur de la capacité dans un réceptacle approprié.

Bien entendu et cela sans sortir du cadre de l'invention, il peut être prévu que la butée 78 soit également une butée amovible semblable à la butée 80.

Par cela, à partir de la position P1, l'operateur commande la butée 78 pour qu'elle s'escamote dans la platine et déplace le levier, selon un débattement angulaire de 180° dans un sens antihoraire, pour qu'il arrive à la position P2 avec la coïncidence de l'évidement 32 avec l'échancrure 28'.

Après un seul ou une série de prélèvement et de manière régulière le godet 30 est actionné à vide, sans prélever d'échantillon, par l'intermédiaire de la tige 70 et le levier 72. Ceci se réalise par le déplacement, dans un seul sens (horaire ou antihoraire) ou dans les deux sens (horaire et antihoraire), du levier et du godet qu'il contrôle entre la position N et la position P3.

Comme mieux illustré en partie sur la figure 2, durant cette course à vide, l'évidement 32 du godet peut être totalement ou en partie en relation avec l'évidement 28' du fond 26. Par contre, il n'est jamais en coïncidence, même partielle, avec l'évidement 28 du couvercle. Dans cette plage angulaire (c), il est donc possible d'actionner le godet avec la fréquence souhaitée, puisqu'aucun prélèvement d'échantillon n'a lieu dans cette plage.

Cette course à vide permet ainsi d'éviter la grippage des pièces mobiles, comme le godet, qui, lors de longues périodes d'immobilisation, peut se produire par dépôt de poudre, agglomération de produits dus à la nature des composants chimiques, aux conditions de pression et température et à la durée d'exposition dans la capacité.

Ainsi par exemple lorsque le dispositif d'échantillonnage est utilisé pour prélever des échantillons de catalyseurs dans une unité de reformage dont la régénération du catalyseur n'est pas continue, les prélèvements de catalyseurs sont effectués environ tous les six mois et il est recommandé d'effectuer au moins une course à vide toutes les semaines.

Bien entendu et cela sans sortir du cadre de l'invention, le dispositif d'échantillonnage peut être appliqué au prélèvement des échantillons de catalyseurs dans une unité de raffinage de pétrole

## Revendications

1. Dispositif d'échantillonnage de solide (14) à partir d'une enceinte fermée (12), ledit dispositif comprenant un corps (18) portant une tête de prélèvement (16) avec une échancrure de collecte (28) du solide, une échancrure de transfert (28') du solide collecté, des moyens d'obturation à déplacement angulaire (30) pour lesdites échancrures contrôlés par des moyens de commande (48), **caractérisé en ce que** le dispositif comprend en outre des moyens de limitation de débattement angulaire (78, 80) des moyens d'obturation pour un déplacement à vide (c) desdits moyens.

2. Dispositif d'échantillonnage de solide selon la revendication 1, **caractérisé en ce que** les moyens de commande comprennent une tige (70) reliée aux moyens d'obturation, **en ce que** les moyens de limitation comprennent des butées (78, 80), dont l'une (80) au moins des butées est amovible, pour limiter le déplacement angulaire.

3. Dispositif d'échantillonnage de solide selon la revendication 2, **caractérisé en ce que** la tige (70) est reliée à un levier de manoeuvre (72) coopérant avec les butées.

4. Dispositif d'échantillonnage de solide selon l'une des revendications 2 ou 3, **caractérisé en ce que** la tige (70) porte un moyen à ressort de torsion (86) pour l'appui circonférentiel du levier sur l'une (80) des butées.

5. Dispositif d'échantillonnage de solide selon la revendication 1, **caractérisé en ce que** les moyens de commande comprennent une tige (70) reliée aux moyens d'obturation et à un motoréducteur à deux sens de rotation avec un dispositif de détection des fins de course pour limiter le déplacement angulaire à vide (c) des moyens d'obturation.

6. Dispositif d'échantillonnage de solide selon la revendication 1, **caractérisé en ce que** les moyens de commande comprennent une tige (70) reliée aux moyens d'obturation et à une came (92) contrôlée par un vérin (90).

7. Dispositif d'échantillonnage de solide selon la revendication 1, **caractérisé en ce que** les moyens de commande comprennent une tige (70) reliée aux moyens d'obturation et portant un pignon coopérant avec une crémaillère portée par un vérin et **en ce que** la limitation du déplacement angulaire à vide (c) des moyens d'obturation est réalisée par la course du piston du vérin.

8. Dispositif d'échantillonnage de solide selon l'une des revendications précédentes, **caractérisé en ce que** les moyens d'obturation comprennent un godet (30) muni d'un évidement axial (32) traversant ledit godet.

9. Dispositif selon l'une des revendications précédentes appliqué au prélèvement des échantillons de catalyseurs dans une enceinte isolée de l'atmosphère.

10. Dispositif selon l'une des revendications 1 à 8 appliqué au prélèvement des échantillons de catalyseurs dans une unité de raffinage de pétrole.

11. Dispositif selon l'une des revendications 1 à 8 appliqué au prélèvement des échantillons de catalyseurs dans une unité de reformage.

12. Procédé pour utiliser un dispositif d'échantillonnage de solide à partir d'une enceinte fermée (12), ledit dispositif comprenant une tête de prélèvement (16) avec une échancrure de collecte (28) du solide, une échancrure de transfert (28') du solide collecté et des moyens d'obturation à déplacement angulaire (30) pour lesdites échancrures contrôlés par des moyens de commande (48), **caractérisé en ce qu'**il consiste à réaliser un déplacement angulaire à vide (c) des moyens d'obturation pour éviter le grippage desdits moyens d'obturation et/ou desdits moyens de commande.

13. Procédé pour utiliser un dispositif d'échantillonnage selon la revendication 12, **caractérisé en ce qu'**il consiste à réaliser le déplacement angulaire à vide selon des moyens d'obturation en ne permettant pas la collecte du solide par la tête de prélèvement.

14. Procédé pour utiliser un dispositif d'échantillonnage selon la revendication 12, **caractérisé en ce qu'**il consiste à réaliser le déplacement angulaire à vide de façon périodique.

15. Procédé pour utiliser un dispositif d'échantillonnage selon la revendication 10, **caractérisé en ce qu'**il consiste à réaliser le déplacement angulaire à vide selon une périodicité hebdomadaire.
